# EUROPÄISCHE PATENTSCHRIFT

(11) **EP 1 309 636 B1**
(45) Veröffentlichungstag und Bekanntmachung des Hinweises auf die Patenterteilung: **06.12.2006**
(21) Anmeldenummer: 01965159.5
(22) Anmeldetag: 01.08.2001
(51) Int. Cl.: C08F 251/00, C08F 220/00, C08B 31/00, C08L 3/00, D21H 17/00

(54) **STÄRKEHALTIGE POLYMERDISPERSIONEN**
POLYMER DISPERSIONS CONTAINING STARCH
DISPERSIONS POLYMERES CONTENANT DE L'AMIDON

(30) Priorität: 11.08.2000 DE 10039388
(43) Veröffentlichungstag der Anmeldung: 14.05.2003
(73) Patentinhaber: BASF Aktiengesellschaft, 67056 Ludwigshafen (DE)
(72) Erfinder: KÜHN, Ingolf, 99891 Schmerbach (DE); SCHUHMACHER, Rudolf, 67459 Böhl-Iggelheim (DE)
(74) Vertreter: Isenbruck, Günter
(86) Internationale Anmeldenummer: PCT/EP2001/008897
(87) Internationale Veröffentlichungsnummer: WO 2002/014393

(56) Entgegenhaltungen:
- EP-A- 0 276 770
- EP-A- 0 924 222
- DE-A- 3 730 887

## Beschreibung

Die Erfindung betrifft ein Verfahren zur Herstellung stärkehaltiger Polymerdispersionen, die stärkehaltigen Polymerdispersionen selbst sowie ihre Verwendung.

Polymerdispersionen, die zur Stabilisierung der Polymerteilchen Stärke oder Stärkederivate als Schutzkolloide enthalten, werden als Leimungsmittel und Beschichtungsmittel für Papier verwendet. Derartige Polymerdispersionen werden durch Copolymerisation ethylenisch ungesättigter Monomere durch radikalische Emulsionspolymerisation in Wasser als Lösungsmittel in Gegenwart von Stärke oder Stärkederivaten, die oxidativ, hydrolytisch oder enzymatisch abgebaut worden sein können, als Schutzkolloid erhalten. Dabei werden peroxidische Initiatoren eingesetzt.

In EP-A 0 735 065 ist die Herstellung amphotherer Polymerisatdispersionen in Gegenwart von Stärke und/oder Stärkederivaten durch Zweistufenpolymerisation beschrieben. Dabei wird in einer ersten Verfahrensstufe eine Monomerenmischung aus ethylenisch ungesättigten Monomeren in Gegenwart von enzymatisch-hydrolytisch und/oder säurehydrolytisch abgebauter Stärke polymerisiert, wobei Peroxid, wie H₂O₂, als wasserlöslicher Radikalinitiator mit der Stärkelösung vorgelegt wird oder aber in Kombination mit reduzierenden Komponenten im kontinuierlichen Zulaufverfahren zudosiert wird. Die in der ersten Stufe erhaltene Dispersion wird mit einer weiteren Monomerenmischung polymerisiert, die außer den ethylenisch ungesättigten Monomeren A stickstoffhaltige Monomere B mit basischem Charakter enthält. Dabei werden als Radikalinitiatoren vorzugsweise Redox-Systeme aus Peroxiden und/oder Hydroperoxiden als Oxidationsmittel und einer reduzierenden Komponente eingesetzt, wobei die reduzierende Komponente zusammen mit der in der ersten Verfahrensstufe hergestellten Dispersion vorgelegt wird und die oxidierende Komponente zeitgleich mit dem Monomerzulauf zudosiert wird.

In EP-A 0 307 816 ist die Herstellung eines Papierleimungsmittels beschrieben, bei der Stärke in wässriger Lösung zunächst enzymatisch und anschließend oxidativ in Gegenwart von Wasserstoffperoxid abgebaut wird. Zu der wässrigen Lösung der abgebauten Stärke wird Wasserstoffperoxid als Radikalstarter auf einmal und anschließend eine Emulsion aus Acrylnitril und n-Butylacrylat kontinuierlich zugegeben. Gleichzeitig mit dem Monomeren-Zulauf wird weiteres Wasserstoffperoxid separat kontinuierlich zudosiert.

In DE-A 36 27 494 ist die Herstellung eines Leimungsmittels für Papier auf Basis feinteiliger wässriger Dispersionen von Copolymerisaten aus (Meth)Acrylnitril, Acrylsäureester sowie gegebenenfalls weiterer ethylenisch ungesättigter Monomere in einer Emulsionspolymerisation beschrieben. Die Copolymerisation der Monomere erfolgt in wässriger Lösung einer abgebauten Stärke in Gegenwart eines Peroxidgruppen enthaltenden Initiators. Dabei wird in einer ersten Stufe ein Teil der Monomeren zusammen mit Initiatorlösung in der wässrigen Stärkelösung vorgelegt und polymerisiert. Anschließend wird in einer zweiten Stufe der Rest der Monomere und der Initiatorlösung kontinuierlich oder portionsweise zugefügt und polymerisiert.

Die nach den vorstehend beschriebenen Verfahren erhältlichen Polymerdispersionen sind, was ihre Leimungswirkung anbetrifft, noch verbesserungsbedürftig.

Aufgabe der Erfindung ist, Leimungs- und Beschichtungsmittel für Papier auf Basis stärkehaltiger Polymerdispersionen mit verbesserter Leimungswirkung bereitzustellen.

Gelöst wird die Aufgabe durch ein Verfahren zur Herstellung einer Polymerdispersion durch Copolymerisation von 20 bis 70 Gewichtsteilen eines Monomerengemischs aus
a) 2,5 bis 100 Gew.-% eines oder mehrerer (Meth)Acrylsäureester von einwertigen, gesättigten C₃-C₈-Alkoholen als Monomere A, und
b) 0 bis 97,5 Gew.-% eines oder mehrerer weiterer ethylenisch ungesättigter Monomerer als Monomere B
in 100 Gewichtsteilen einer wässrigen Lösung, die 5 bis 35 Gew.-% einer Stärke und/oder eines Stärkederivates enthält, in Emulsionspolymerisation in Gegenwart eines Peroxidgruppen enthaltenden Initiators, bei dem der Initiator gleichzeitig mit den Monomeren kontinuierlich zudosiert wird, dadurch gekennzeichnet, daß in einem ersten Zulauf-Zeitraum von 5 bis 60 Minuten eine erste Initiatormenge und in einem zweiten Zulauf-Zeitraum von 30 bis 120 Minuten eine zweite Initiatormenge zudosiert wird, wobei die erste Initiatormenge größer als die zweite Initiatormenge ist.

Es wurde überraschenderweise festgestellt, daß sich eine deutliche Verbesserung der Leimungswirkung der hergestellten Polymerdispersion ergibt, wenn die Stärke während der Polymerisation und über den gesamten Polymerisationszeitraum durch den peroxidischen Initiator oxidativ abgebaut wird. Wird ein starker oxidativer Abbau über den gesamten Polymerisationszeitraum durchgeführt, wird durch Zerstörung des Schutzkolloides die Polymerdispersion instabil, was zu unerwünschten Filtrationsrückständen führt. Durch den erfindungsgemäßen zweistufigen Initiatorzulauf mit weniger Initiator in der zweiten Stufe läßt sich jedoch eine hohe Leimungswirksamkeit der Polymerdispersion ohne Bildung von Filtrationsrückstand realisieren.

Geeignete Peroxidgruppen enthaltende Initiatoren sind Wasserstoffperoxid und organische Peroxide, Hydroperoxide und Peroxodisulfate, beispielsweise Cumolhydroperoxid, t-Butylhydroperoxid, Natrium-, Kalium- oder Ammoniumperoxodisulfat.

Als Initiator bevorzugt ist Wasserstoffperoxid. Wasserstoffperoxid kann als Initiator allein oder in Kombination mit einem Schwermetallsalz und gegebenenfalls einem weiteren Reduktionsmittel eingesetzt werden. Vorzugsweise wird Wasserstoffperoxid in Kombination mit einem Schwermetallsalz, bevorzugt Eisen(II)sulfat, eingesetzt. Geeignete weitere Reduktionsmittel sind beispielsweise Ascorbinsäure, Natriumdisulfit oder Natriumdithionit. Da auch die in wässriger Lösung vorliegende Stärke selbst als Reduktionsmittel wirkt, ist der Einsatz eines weiteren Reduktionsmittels weniger bevorzugt. Das Schwermetallsalz wird im allgemeinen zusammen mit der wässrigen Stärkelösung vorgelegt.

Zu der wässrigen Lösung enthaltend die Stärke und/oder das Stärkederivat und gegebenenfalls das Schwermetallsalz wird das Monomerengemisch kontinuierlich zudosiert, wobei gleichzeitig in einem ersten Zulauf-Zeitraum von 5 bis 60 Minuten, bevorzugt 10 bis 30 Minuten eine erste Initiatormenge und in einem zweiten Zulauf-Zeitraum von 15 bis 180 Minuten, bevorzugt 30 bis 120 Minuten eine zweite Initiatormenge zudosiert wird, wobei die erste Initiatormenge größer als die zweite Initiatormenge ist. Im allgemeinen beträgt die erste Initiatormenge das zwei- bis vierfache der zweiten Initiatormenge. Ist der Initiator Wasserstoffperoxid, so beträgt die erste Initiatormenge bevorzugt 2 bis 4 Gew.-% und die zweite Initiatormenge 0,5 bis 1 Gew.-%, bezogen auf das Gewicht der insgesamt zudosierten Monomerenmenge.

Es werden im allgemeinen 20 bis 70, bevorzugt 40 bis 50 Gewichtsteile eines Monomerengemischs aus den Monomeren A und gegebenenfalls B in 100 Gewichtsteilen der wässrigen Lösung, die 5 bis 35 Gew.-%, bevorzugt 10 bis 25 Gew.-% Stärke und/oder Stärkederivate enthält, copolymerisiert.

Monomere A sind beispielsweise n-Propylacrylat, iso-Propylacrylat, n-Butylacrylat, iso-Butylacrylat, tert.-Butylacrylat, Neopentylacrylat, n-Hexylacrylat, Cyclohexylacrylat und 2-Ethylhexylacrylat. Bevorzugte Monomere A sind n-Butylacrylat, iso-Butylacrylat und tert.-Butylacrylat sowie deren Mischungen.

Geeignete weitere ethylenisch ungesättigte Monomere B sind beispielsweise ethylenisch ungesättigte C₃- bis C₅-Carbonsäuren, wie Acrylsäure, Methacrylsäure, Maleinsäure, Fumarsäure, Itaconsäure und Maleinsäurehalbester, Styrol, Acrylamid, Methacrylamid, Acrylnitril, Methacrylnitril, weitere, von den Monomeren A verschiedene C₁- bis C₁₈-Alkyl(meth)acrylate, wie Methylacrylat, Ethylacrylat, Decylacrylat, Palmitylacrylat und Stearylacrylat, sowie basische Verbindungen, wie Dimethylaminoethylmethacrylat, Dimethylaminoethylacrylat, Diethylaminoethylacrylat, N-Vinylimidazolin und N-Vinyl-2-methylimidazolin.

In einer bevorzugtenAusführungsform werden
a) 10 bis 50 Gew.-%, besonders bevorzugt 20 bis 40 Gew.-% n-Butylacrylat als Monomer A mit
b) 50 bis 90 Gew.-%, besonders bevorzugt 60 bis 80 Gew.-% Styrol als Monomer B copolymerisiert,
wobei die Summe aus den Komponenten a) und b) 100 Gew.-% ergibt.

Die Copolymerisation der Monomeren A und gegebenenfalls B erfolgt in wässrigem Medium in Gegenwart einer Stärke oder eines Stärkederivats. Geeignete Stärken sind native Stärken wie Kartoffel-, Weizen,- Reis-, Tapioka- und Maisstärke. Geeignete Stärkederivate sind chemisch modifizierte Stärken wie Hydroxyethyl-, Hydroxypropyl- oder quaternisierte Aminoalkylgruppen enthaltende Stärken. Die Stärken beziehungsweise Stärkederivate können vor Beginn der Polymerisationsreaktion einem acidolytischem oder enzymatischen Abbau unterworfen werden. Es können ferner oxidativ abgebaute Stärken eingesetzt werden, die vor Beginn der Polymerisationsreaktion gegebenenfalls weiter acidolytisch oder enzymatisch abgebaut werden.

In einer bevorzugten Ausführungsform der Erfindung wird oxidativ abgebaute Stärke in wässriger Lösung vorgelegt und enzymatisch abgebaut. Der enzymatische Abbau wird gestoppt und eine wässrige Schwermetallsalzlösung zugegeben. Zu dieser Lösung wird eine Monomerenemulsion, enthaltend die Monomere A und gegebenenfalls B in einem Emulgator, kontinuierlich zulaufen gelassen. Gleichzeitig mit der Monomeren-Zugabe beginnt der Initiatorzulauf. Der Initiatorzulauf kann mit dem Monomerenzulauf enden oder darüber hinaus fortgesetzt werden.

Es kann aber auch mit dem Initiatorzulauf erst nach Beginn des Monomerenzulaufs begonnen werden. Wesentlich ist, daß in dem zweiten Zulauf-Zeitraum insgesamt eine geringere Initiatormenge als im ersten Zulauf-Zeitraum zudosiert wird.

Die Polymerisationstemperatur beträgt im allgemeinen von 60 bis 100°C, vorzugsweise von 75 bis 95°C bei Normaldruck.

Gegenstand der vorliegenden Erfindung sind auch die nach dem vorstehend beschriebenen Verfahren erhältlichen Polymerdispersionen sowie deren Verwendung als Leimungsmittel und Beschichtungsmittel für Papier.

Die Erfindung wird durch die nachfolgenden Beispiele näher erläutert.

### Beispiele

### Beispiel 1 und Vergleichsbeispiele V1-V6

### Beispiel 1

In einem Polymerisationsgefäß, das mit Rührer, Rückflusskühler, Dosiervorrichtungen und Einrichtung zum Arbeiten unter Stickstoffatmosphäre ausgestattet ist, legt man 144 g einer oxidativ abgebauten Stärke mit einem COO⁻- Substitutionsgrad von 0,03-0,04 und einem K-Wert von 34 (bestimmt nach DIN53726) (Amylex 15 der Fa. Südstärke) und 298 g Wasser vor und erwärmt unter Rühren in 25 Minuten auf eine Temperatur von 85°C. Dann fügt man 1,6 g einer 25 gew.-%igen wässrigen Calciumacetatlösung und 10 g einer 1 gew.-%igen handelsüblichen Enzymlösung (α-Amylase, Termamyl 120 L der Fa. Novo Nordisk) zu. Nach 30 Minuten wird der enzymatische Stärkeabbau durch Zugabe von 16 g Eisessig abgestoppt. Man fügt außerdem 32 g einer 1 gew.-%igen wässrigen Eisen(II)sulfatlösung zu. Die Temperatur der Reaktionsmischung wird auf 85°C gehalten. Bei dieser Temperatur gibt man innerhalb von 90 Minuten eine Mischung aus 100 g Wasser, 5 g einer 4 gew.-%igen Emulgatorlösung (Na-C₁₄-C₁₅-alkylsulfonate, Emulgator K 30 der Fa. Bayer AG), 84 g n-Butylacrylat und 196 g Styrol hinzu. Gleichzeitig mit dem Monomerenzulauf beginnt der Initiatorzulauf. Innerhalb der ersten 30 Minuten werden 40 g einer 30 gew.-%igen Wasserstoffperoxidlösung zugegeben. Anschließend werden in 75 Minuten 13 g einer 30 gew.-%igen Wasserstoffperoxidlösung zugegeben. Nachdem die gesamte Monomerenmenge zudosiert worden ist, wird die Temperatur bis zum Ende des Initiatorzulaufes auf Polymerisationstemperatur gehalten. Anschließend wird auf Raumtemperatur abgekühlt und ein pH-Wert der Dispersion von 5 eingestellt. Man erhält eine Dispersion mit einem Feststoffgehalt von 42 Gew.-%, einem LD-Wert von 93 % (Transmission von Weißlicht), einem Teilchendurchmesser von 88 nm und einem Filtrationsrückstand von < 0,002 Gew.-%, bezogen auf den Gesamtansatz.

### Vergleichsbeispiel V1

In einem Polymerisationsgefäß, das mit Rührer, Rückflusskühler, Dosiervorrichtungen und Einrichtungen zum Arbeiten unter Stickstoffatmosphäre ausgestattet ist, legt man 144,5 g der oxidativ abgebauten Stärke aus Beispiel 1 und 303 g Wasser vor und erwärmt unter Rühren in 25 Minuten auf eine Temperatur von 85°C. Dann fügt man 1,6 g einer 25 gew.-%igen wässrigen Calciumacetatlösung und 20 g der 1 gew.-%igen Enzymlösung aus Beispiel 1 zu. Nach 30 Minuten wird der enzymatische Stärkeabbau durch Zugabe von 16 g Eisessig abgestoppt. Man fügt außerdem 32 g einer 1 gew.-%igen wässrigen Eisen(II)sulfatlösung zu. Die Temperatur der Reaktionsmischung wird auf 85°C gehalten. Bei dieser Temperatur gibt man innerhalb von 90 Minuten eine Mischung aus 100 g Wasser, 5 g einer 4 gew.-%igen Emulgatorlösung (Emulgator K 30 der Fa. Bayer AG), 84 g n-Butylacrylat und 196 g Styrol hinzu. Gleichzeitig beginnt der Initiatorzulauf. In 90 Minuten werden 40 g einer 30 gew.-%igen Wasserstoffperoxidlösung zugegeben. Nach Zugabe der gesamten Monomerenmenge wird die Temperatur noch bis zum Ende des Initiatorzulaufes auf Polymerisationstemperatur gehalten. Anschließend wird auf Raumtemperatur abgekühlt und ein pH-Wert der Dispersion von 5 eingestellt. Man erhält eine Dispersion mit einem Feststoffgehalt von 42,9 Gew.-%, einem LD-Wert von 90%, einem Teilchendurchmesser von 101 nm und einem Filtrationsrückstand von 0,02 Gew.-%, bezogen auf den Gesamtansatz.

### Vergleichsbeispiel V2

In einem Polymerisationsgefäß, das mit Rührer, Rückflusskühler, Dosiervorrichtungen und Einrichtung zum Arbeiten unter Stickstoffatmosphäre ausgestattet ist, legt man 144,5 g der oxidativ abgebauten Stärke aus Beispiel 1 und 330 g Wasser vor und erwärmt unter Rühren in 25 Minuten auf eine Temperatur von 85°C. Dann fügt man 1,6 g einer 25 gew.-%igen wässrigen Calciumacetatlösung und 20 g der 1 gew.-%igen Enzymlösung aus Beispiel 1 hinzu. Nach 30 Minuten wird der enzymatische Stärkeabbau durch Zugabe von 16 g Eisessig abgestoppt. Man fügt außerdem 32 g einer 1 gew.-%igen wässrigen Eisen(II)sulfatlösung zu. Die Temperatur der Reaktionsmischung wird auf 85°C gehalten. Bei dieser Temperatur gibt man innerhalb von 90 Minuten eine Mischung aus 100 g Wasser, 5 g der Emulgatorlösung aus Beispiel 1, 84 g n-Butylacrylat und 196 g Styrol hinzu. Gleichzeitig beginnt der Initiatorzulauf. Man gibt 13 g einer 30 gew.-%igen Wasserstoffperoxidlösung in 90 Minuten zu. Nach Ende der Monomeren-Zugabe wird die Temperatur bis zum Ende des Initiatorzulaufes auf Polymerisationstemperatur gehalten. Anschließend wird auf Raumtemperatur abgekühlt und ein pH-Wert der Dispersion von 5 eingestellt. Man erhält eine Dispersion mit einem Feststoffgehalt von 43,5 Gew.-%, einem LD-Wert von 90%, einem Teilchendurchmesser von 119 nm und einem Filtrationsrückstand von 0,004 Gew.-%, bezogen auf den Gesamtansatz.

### Vergleichsbeispiel V3 (nach EP-A 0 735 065)

### Erste Verfahrensstufe:

In einem Doppelmantelrührbehälter mit Flügelrührer, Rückflusskühler und N₂-Zuleitung werden 500 Gewichtsteile Wasser vorgelegt und unter Rühren 126 Teile Kartoffelstärkeacetatester mit einem Substitutionsgrad von 0,03 zugegeben. Anschließend versetzt man mit 0,3 Gewichtsteilen α-Amylase, heizt auf 80°C und hält diese Temperatur 2 Stunden lang. Nach Zugabe von 3 Gewichtsteilen Natriumperoxodisulfat, gelöst in 15 Gewichtsteilen Wasser, wird eine Mischung von 30 Gewichtsteilen Styrol, 15 Gewichtsteilen n-Butylacrylat und 1 Gewichtsteil Acrylsäure über einen Zeitraum von 40 Minuten kontinuierlich zudosiert. Nach Ende des Zulaufs rührt man weitere 60 Minuten bei 80°C.

### Zweite Verfahrensstufe:

Zur vorliegenden Dispersion der ersten Verfahrensstufe gibt man bei 80°C ein Gewichtsteil Hydroxymethansulfinsäure-Natriumsalz gelöst in 10 Gewichsteilen Wasser zu. Unmittelbar danach werden bei gleichzeitigem Dosierbeginn, aber getrennt voneinander ein Gemisch von 90 Gewichtsteilen Styrol und 45 Gewichtsteilen n-Butylacrylat, ein Gemisch von 16 Gewichtsteilen Trimethylammoniumethylmethacrylat-Chlorid in 14 Teilen Wasser und ein Gemisch von 3 Gewichtsteilen Wasserstoffperoxid in 35 Gewichtsteilen Wasser über einen Zeitraum von 150 Minuten kontinuierlich zudosiert. Nach Ende der Dosierung rührt man 20 Minuten bei 85°C nach und erhält nach dem Abkühlen eine koagulatfreie Polymerisatdispersion mit einem Feststoffgehalt von 33 Gew.-% und einem pH-Wert von 5,5 und einer mittleren Teilchengröße von 110 nm.

### Vergleichsbeispiel V4 (nach EP-A 0 735 065)

### Erste Verfahrensstufe:

In einem 11-Doppelmantelrührbehälter mit Flügelrührer, Rückflusskühler und N₂-Zuleitung werden 500 Gewichtsteile entionisiertes Wasser vorgelegt und unter Rühren 315 Gewichtsteile einer oxidativ abgebauten Kartoffelstärke zugegeben. Danach gibt man 0,3 Teile α-Amylase zu, heizt auf 80°C auf und hält diese Temperatur 2 Stunden lang. Anschließend werden 3 Gewichtsteile 37 gew.%ige Formaldehydlösung zugegeben. Nach Zugabe von weiteren 3 Gewichtsteilen Natriumperoxdisulfat werden innerhalb von 35 Minuten eine Mischung aus 15 Gewichtsteilen Styrol, 30 Gewichtsteilen n-Butylacrylat und 2 Gewichtsteilen Acrylsäure kontinuierlich zudosiert. Man lässt noch 1 Stunde nachpolymerisieren.

### Zweite Verfahrensstufe:

Zur vorliegenden Dispersion der ersten Verfahrensstufe wird bei 82°C 1 Teil Hydroxymethansulfmsäure-Natriumsalz in 10 Teilen Wasser gelöst zugegeben. Unmittelbar danach werden bei gleichzeitigem Dosierbeginn getrennt voneinander eine Lösung von 3 Teilen Wasserstoffperoxid in 10 Teilen Wasser und eine Lösung von 30 Teilen Trimethylammoniumethyhmethacrylat-Chlorid in 20 Teilen Wasser und eine Mischung von 90 g Styrol und 60 g n-Butylacrylat über einen Zeitraum von 120 Minuten kontinuierlich zudosiert. Man lässt noch eine Stunde bei dieser Temperatur nachpolymerisieren und erhält nach Zugabe von 9 Teilen 20 gew.-%iger Natronlauge eine koagulatfreie Dispersion.

### Vergleichsbeispiel V5 (nach DE-A 36 27 594)

In einem 11-Vierhalskolben, der mit Rührer, Rückflusskühler, Dosiervorrichtungen und Einrichtung zum Arbeiten unter Stickstoffatmosphäre ausgestattet ist, werden 31,8 g einer oxidativ abgebauten Stärke und 219 g Wasser vorgelegt und unter Rühren 30 Minuten auf eine Temperatur von 85°C erwärmt. Dann fügt man 1 g einer 1 gew.-%igen wässrigen Calciumacetatlösung und 1,6 g einer 1 gew.-%igen handelsüblichen Enzymlösung (α-Amylase) zu. Nach 20 Minuten wird der enzymatische Stärkeabbau durch Zugabe von 4 g Eisessig abgestoppt. Man fügt außerdem 7 g einer 1 gew.-%igen wässrigen Eisen(II)sulfatlösung und 0,34 g 30 gew.-%ige Wasserstoffperoxid-Lösung zu. Die Temperatur der Reaktionsmischung wird auf 85°C gehalten. Bei dieser Temperatur gibt man innerhalb von einer Stunde eine Mischung aus 40 g Acrylnitril und 33,5 g n-Butylacrylat und separat davon ebenfalls innerhalb von einer Stunde 61 ml einer 0,7 gew.-%igen Wasserstoffperoxid-Lösung zu. Nachdem die gesamte Monomerenmenge zudosiert ist, polymerisiert man noch eine Stunde bei einer Temperatur von 85°C nach. Man erhält eine Dispersion mit einem Feststoffgehalt von 26,3 Gew.-%. Der LD-Wert der Dispersion beträgt 96 %.

### Vergleichsbeispiel V6 (nach EP 0 307 816 B1)

In einem Polymerisationsgefäß, das mit Rührer, Dosiervorrichtungen und einer Einrichtung für das Arbeiten unter Stickstoff ausgestattet ist, werden unter Rühren 20,7 Teile einer 82 gew.-%igen wässrigen kationischen Kartoffelstärke (η = 0,1 dl/g, Substitutionsgrad 0,025 mol Stickstoff pro Mol Glucoseeinheit) in 133 Gew.-Teilen Wasser bei 85°C gelöst. Man fügt 3,7 Gewichtsteile Eisessig und 0,03 Gewichtsteile Eisen(II)sulfat (FeSO₄•7H₂O) zu, gibt dann 0,8 Teile 30 gew.-%ige Wasserstoffperoxid-Lösung zu und nach 20 Minuten nochmals 0,8 g 30 gew.-%ige Wasserstoffperoxid-Lösung. Man dosiert anschließend innerhalb von 2 Stunden eine Emulsion von 44 Teilen n-Butylacrylat und 39 Teilen Styrol in einer Lösung von 0,045 Teilen Natriumlaurylsulfat in 29 Teilen Wasser und gleichbeginnend damit aus einem zweiten Zulaufgefäß 14 Teile einer 5,5 gew.-%igen Wasserstoffperoxid-Lösung. Nach Beendigung der Monomeren- und Wasserstoffperoxid-Zugabe wird noch eine Stunde bei 85°C nalchpolymerisiert. Man erhält eine kationische Dispersion mit einem Feststoffgehalt von 34 Gew.-% und einem LD-Wert von 86.

### Anwendungstechnische Prüfung

Auf einem nicht vorgeleimten, mit gefälltem Calciumcarbonat gefülltem Papier (70 % Birken-, 30 % Kiefernsulfat) wurde die Oberflächenleimungswirkung von Leimpressenflotte (Konzentration: 2 g/l) gemäß Beispiel 1 und der Vergleichsbeispiele V1 bis V6 gemessen. Es wurden der Cobb-Wert nach DIN 53132 und die Tintenschwimmdauer nach DIN 53126 bestimmt. Je niedriger der Cobb-Wert und je höher die Tintenschwimmdauer, um so wirksamer ist das Leimungsmittel.

Die Ergebnisse sind in der Tabelle zusammengefaßt.

**Tabelle**

| Leimungsmittel | Cobb-Wert [g/m²] | Tintenschwimmdauer [min.] |
|---|---|---|
| Beispiel 1 | 30 | 20 |
| Vergleichsbeispiel V1 | 35 | 10 |
| Vergleichsbeispiel V2 | 70 | 2 |
| Vergleichsbeispiel V3 | 92 | 0 |
| Vergleichsbeispiel V4 | 106 | 0 |
| Vergleichsbeispiel V5 | 48 | 7 |
| Vergleichsbeispiel V6 | 55 | 4 |

Durch starken oxidativen Abbau der Stärke (Beispiel 1) läßt sich eine Verbesserung der Leimungswirkung gegenüber dem Stand der Technik (Vergleichsbeispiele) erreichen.

Dabei zeigt Vergleichsbeispiel V1, dass nur durch den zweistufigen Initiatorzulauf gemäß Beispiel 1 ein niedriger Filtrationsrückstand erreicht wird. Vergleichsbeispiel V2 zeigt, dass mit einer geringen Wasserperoxidmenge zwar wenig Filtrationsrückstand, aber kaum Leimungswirkung erzielt wird.

## Patentansprüche

1. Verfahren zur Herstellung einer Polymerdispersion durch Copolymerisation von 20 bis 70 Gewichtsteilen eines Monomerengemischs aus
a) 2,5 bis 100 Gew.-% eines oder mehrerer (Meth)Acrylsäureester von einwertigen, gesättigten C₃-C₈-Alkoholen als Monomere A, und
b) 0 bis 97,5 Gew.-% eines oder mehrerer weiterer ethylenisch ungesättigter Monomere als Monomere B
in 100 Gewichtsteilen einer wässrigen Lösung, die 5 bis 35 Gew.-% einer Stärke oder eines Stärkederivats enthält, in Emulsionspolymerisation in Gegenwart eines Peroxidgruppen enthaltenden Initiators, bei dem Initiator und Monomere kontinuierlich zudosiert werden, **dadurch gekennzeichnet, daß** in einem ersten Zulauf-Zeitraum von 5 bis 60 Minuten eine erste Initiatormenge und in einem zweiten Zulauf-Zeitraum von 15 bis 180 Minuten eine zweite Initiatormenge zudosiert wird, wobei die erste Initiatormenge größer als die zweite Initiatormenge ist.

2. Verfahren nach Anspruch 1, **dadurch gekennzeichnet, daß** die erste Initiatormenge das zwei- bis vierfache der zweiten Initiatormenge beträgt.

3. Verfahren nach Anspruch 1 oder 2, **dadurch gekennzeichnet, daß** der Initiator Wasserstoffperoxid ist.

4. Verfahren nach Anspruch 3, **dadurch gekennzeichnet, daß** die erste Initiatormenge 2 bis 4 Gew.-% und die zweite Initiatormenge 0,5 bis 1 Gew.-%, bezogen auf das Gewicht der insgesamt zudosierten Monomerenmenge, beträgt.

5. Verfahren nach einem der Ansprüche 1 bis 4, **dadurch gekennzeichnet, daß** ein Monomerengemisch aus
a) 50 bis 90 Gew.-% n-Butylacrylat als Monomere A und
b) 10 bis 50 Gew.% Styrol als Monomere B
copolymerisiert wird.

6. Verfahren nach einem der Ansprüche 1 bis 5, **dadurch gekennzeichnet, daß** die Stärke beziehungsweise das Stärkederivat vor Beginn der Polymerisation acidolytisch oder enzymatisch abgebaut wird.

7. Polymerdispersion, herstellbar gemäß dem Verfahren nach einem der Ansprüche 1 bis 6.

8. Verwendung der Polymerdispersion nach Anspruch 7 als Leimungs- und Beschichtungsmittel für Papier.

## Claims

1. A process for the preparation of a polymer dispersion by copolymerization of from 20 to 70 parts by weight of a monomer mixture comprising
a) from 2.5 to 100% by weight of one or more (meth)acrylates of monohydric, saturated C₃-C₈-alcohols as monomers A and
b) from 0 to 97.5% by weight of one or more further ethylenically unsaturated monomers as monomers B
in 100 parts by weight of an aqueous solution which comprises from 5 to 35% by weight of a starch and/or of a starch derivative by emulsion polymerization in the presence of an initiator comprising peroxide groups, in which the initiator is metered in simultaneously with the monomers, wherein a first amount of initiator is metered in over a first feed period of from 5 to 60 minutes and a second amount of initiator is metered in over a second feed period of from 15 to 180 minutes, the first amount of initiator being greater than the second amount of initiator.

2. The process according to claim 1, wherein the first amount of initiator is from two to four times the second amount of initiator.

3. The process according to claim 1 or 2, wherein the initiator is hydrogen peroxide.

4. The process according to claim 3, wherein the first amount of initiator is from 2 to 4% by weight and the second amount of initiator is from 0.5 to 1% by weight, based on the weight of the total amount of monomers metered in.

5. The process according to any of claims 1 to 4, wherein a monomer mixture comprising
a) from 50 to 90% by weight of n-butyl acrylate as monomer A and
b) from 10 to 50% by weight of styrene as monomer B
is copolymerized.

6. The process according to any of claims 1 to 5, wherein the starch or the starch derivative is acidolytically or enzymatically degraded before the beginning of the polymerization.

7. A polymer dispersion which can be prepared by a process according to any of claims 1 to 6.

8. The use of a polymer dispersion according to claim 7 as a paper size or coating composition.

## Revendications

1. Procédé de préparation d'une dispersion de polymère par copolymérisation de 20 à 70 parties en poids d'un mélange de monomères à base
a) de 2,5 à 100% en poids d'un ou de plusieurs esters (méth)acryliques d'alcools en C₃-C₈ monofonctionnels, saturés, comme monomères A, et
b) de 0 à 97,5% en poids d'un ou de plusieurs autres monomères éthyléniquement insaturés, comme monomères B,
dans 100 parties en poids d'une solution aqueuse qui contient 5 à 35% en poids d'un amidon ou d'un dérivé d'amidon, dans une polymérisation en émulsion en présence d'un amorceur contenant des groupes peroxyde, dans lequel l'amorceur et les monomères sont dosés de manière continue, **caractérisé en ce que**, dans un premier espace de temps d'introduction de 5 à 60 minutes, une première quantité d'amorceur est dosée et, dans un deuxième espace de temps d'introduction de 15 à 180 minutes, une deuxième quantité d'amorceur est dosée, la première quantité d'amorceur étant plus grande que la deuxième quantité d'amorceur.

2. Procédé suivant la revendication 1, **caractérisé en ce que** la première quantité d'amorceur représente le double ou quadruple de la deuxième quantité d'amorceur.

3. Procédé suivant la revendication 1 ou 2, **caractérisé en ce que** l'amorceur est du peroxyde d'hydrogène.

4. Procédé suivant la revendication 3, **caractérisé en ce que** la première quantité d'amorceur est de 2 à 4% en poids, par rapport au poids de la quantité de monomères dosée au total, et la deuxième quantité d'amorceur est de 0,5 à 1% en poids.

5. Procédé suivant l'une des revendications 1 à 4, **caractérisé en ce qu'**un mélange de monomères à base
a) de 50 à 90% en poids d'acrylate de n-butyle, comme monomère A, et
b) de 10 à 50% en poids de styrène, comme monomère B,
est copolymérisé.

6. Procédé suivant l'une des revendications 1 à 5, **caractérisé en ce que** l'amidon ou respectivement le dérivé d'amidon est dégradé avant le commencement de la polymérisation par acidolyse ou par voie enzymatique.

7. Dispersion de polymère, préparable suivant le procédé selon l'une des revendications 1 à 6.

8. Utilisation de la dispersion de polymère suivant la revendication 7 comme agent d'encollage et de couchage pour du papier.
